# EUROPEAN PATENT SPECIFICATION

(11) **EP 2 334 192 B1**
(45) Date of publication and mention of the grant of the patent: **29.08.2012**
(21) Application number: 09783589.6
(22) Date of filing: 30.09.2009
(51) Int. Cl.: A23F 3/00, A23F 3/16, A23F 3/18

(54) **PROCESS FOR MANUFACTURING TEA PRODUCTS**
VERFAHREN ZUR HERSTELLUNG VON TEEPRODUKTEN
PROCÉDÉ DE FABRICATION DE PRODUITS DE THÉ

(30) Priority: 02.10.2008 EP 08165776; 23.12.2008 EP 08172695
(43) Date of publication of application: 22.06.2011
(73) Proprietor: Unilever PLC, A Company Registered in England and Wales under Company no. 41424, London EC4Y 0DY (GB); Unilever N.V., 3013 AL Rotterdam (NL)
(72) Inventor: COLLIVER, Steven, Peter, Jebel Ali FZE (AE); DOWNIE, Andrew, Lee, Bedfordshire MK44 1LQ (GB); SHARP, David, George, Bedfordshire MK44 1LQ (GB); YOU, Xiaoqing, Bedfordshire MK44 1LQ (GB)
(74) Representative: Clarke, Christopher John
(86) International application number: PCT/EP2009/062670
(87) International publication number: WO 2010/037768

(56) References cited:
- WO-A1-98/23164
- WO-A2-2006/012238
- GB-A- 968 423
- TAKEUCHI H: "Tea leaf juice is prepared from fragmented raw tea leaf with high vitamin C content" WPI / THOMSON,, vol. 2000, no. 34, 9 May 2000 (2000-05-09) , XP002531419

## Description

### TECHNICAL FIELD OF THE INVENTION

The present invention relates to a process for manufacturing a tea product. More particularly the present invention relates to tea products obtained by combining unfermented tea juice with fermented tea material.

### BACKGROUND TO THE INVENTION

Beverages based on the tea plant (*Camellia sinensis*) have been popular throughout the world for many hundreds of years. Traditionally such beverages are produced by infusing leaf tea in hot water.

Most of the tea consumed in the Western World is so-called black tea which is obtained by harvesting leaves of the plant *Camellia sinensis* and withering, rolling, enzymatically oxidizing (fermenting), firing and sorting them. However the leaves can be processed without the fermentation step to produce what is known as green tea. Such tea is widely consumed in parts of the People's Republic of China, Japan, North Africa and the Middle East. In another variation oolong tea is prepared by partial fermentation.

Tea leaves contain a large number of enzymes, biochemical intermediates and structural elements normally associated with plant growth and photosynthesis together with substances that are responsible for the characteristics of tea itself. These include flavanols, flavanol glycosides, polyphenolic acids, caffeine, amino acids, mono- and polysaccharides, proteins, cellulose, lipids, chlorophylls and volatiles.

Flavanols or more specifically flavan-3-ols tend to constitute up to 30% of the dry weight of freshly picked tea leaves and are known as catechins. Green tea retains most of the catechins, but their content in black tea is greatly reduced due to both chemical and enzymatic oxidations taking place during fermentation to give theaflavins and thearubigins.

Catechins have been claimed to possess a variety of biological activities including anti-tumour activity and effects on modulating bodyshape and/or body fat.

Tea contains many other phenols. These include gallic acid, flavanols such as quercetin, kaemferol, myricetin, and their glycosides; and depsides such as chlorogenic acid and paracoumarylquinic acid. Some of these are believed to participate in the chemical reactions that occur during fermentation.

Green tea contains many more catechins than black tea. However despite the burgeoning health consciousness amongst many consumers green tea is usually dismissed in Western countries as being too pale and unpleasant to taste. Furthermore it is typically slow to infuse and therefore not suitable for the Western desire for convenience for the sake of quality. In order to overcome these drawbacks, efforts have been made to provide tea products having the advantageous properties of black tea but with a higher level of catechins than is typical of conventional black tea.

WO 2006 / 012238 discloses a method of preparing a green tea extract from *camellia sinensis* plant comprising: a) providing a quantity of fresh green tea leaves; b) reducing the leaves to leaf fragments; c) combining the leaf fragments with an amount of cold water having a temperature of about 25°C or less that is sufficient to provide a mixture of leaves and water having a ratio of from about 1 :0.01 to about 1 :40 by weight; d) pulverizing the leaves in the mixture of leaves and water and maintaining the mixture for an amount of time sufficient to release intracellular material from the leaf cells into the water to create an aqueous extract component, and a leaf residue component; and e) removing the leaf residue component from the aqueous extract component, wherein a temperature condition of about 50°C or less is controlled throughout the extraction process.

GB 968 423 discloses a method of producing a stable tea juice from fresh tea leaf that has been subjected to the stages of withering, bruising, twisting, fermenting, killing of enzymes, excluding drying, or a selected sequence of these stages, consisting in separating the tea juice from the thus processed leaf in its still moist state.

JP 2000 125824 discloses tea leaf juice obtained from fragmented raw tea leaf with a high vitamin C content

WO 98/23164 (Unilever) discloses a leaf tea comprising a blend of a first substantially fermented tea and a second substantially unfermented tea, characterised in that the blend contains catechins and phenols in a ratio of between 0.15 to 0.4. This document also teaches that the ratio of gallated to non-gallated catechins is related to bitterness and thus tea clones having a low ratio of gallated to non-gallated catechins are preferred.

We have now found that tea juice expressed from fresh tea leaves has a lower ratio of gallated to non-gallated catechins than that of the fresh leaves themselves. Thus green tea juice can be added to black tea products to increase the catechin content thereof whilst maintaining low bitterness, irrespective of the clone from which the fresh leaves originated.

### TESTS AND DEFINITIONS

### Tea

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

"Dhool" refers to macerated fresh tea leaves.

### Expressing Juice

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the tea leaves during the expression step. However, in order to prevent significant extraction of tea solids by the solvent, the moisture content of the tea leaves during expression is that of fresh tea leaves as defined hereinabove. In other words, during the expression step, the moisture content of the fresh tea leaves is between 30 and 90% by weight, more preferably between 60 and 90%. It is also preferred that the fresh leaves are not contacted with nonaqueous solvent (e.g. alcohols) prior to or during expression, owing to the environmental & economic problems associated with such solvents.

### Beverage

As used herein the term "beverage" refers to a substantially aqueous drinkable composition suitable for human consumption.

### Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof. The catechins are sometimes referred to using the following shorthand notation: C for catechin, GC for gallocatechin, CG for catechin gallate, GCG for gallocatechin gallate, EC for epicatechin, EGC for epigallocatechin, ECG for epicatechin gallate, and EGCG for epigallocatechin gallate. The term "gallated catechins" is used as a generic term for CG, ECG, GCG, EGCG and mixtures thereof.

### Theaflavins

As used herein the term "theaflavins" is used as a generic term for theaflavin, theaflavin-3-gallate, theaflavin-3'-gallate, theaflavin-3,3'-digallate and mixtures thereof. The structures of these compounds are well-known (see, for example, structures xi-xiv in Chapter 17 of "Tea - Cultivation to consumption", K.C. Willson and M.N. Clifford (Eds), 1992, Chapman & Hall, London, pp.555-601). The theaflavins are sometimes referred to using the shorthand notation TF1-TF4 wherein TF1 is theaflavin, TF2 is theaflavin-3-gallate, TF3 is theaflavin-3'-gallate and TF4 is theaflavin-3,3'-digallate (or simply "theaflavin digallate"). The term "gallated theaflavins" is used as a generic term for TF2, TF3, TF4 and mixtures thereof.

### Determination of Catechins and Caffeine in Leaf Tea

The amounts of catechins and caffeine in leaf tea are determined simultaneously by reverse-phase HPLC as follows.

### Sample Preparation

1. Grind the leaf tea using a Cyclotech^{™} 1093 sample mill (FOSS Ltd, Warrington, Cheshire, UK) fitted with a 0.5 µm screen, until a fine powder is achieved.
2. Weigh accurately approximately 200 mg of the ground tea into an extraction tube, and record the mass.
3. Warm at least 20 ml of a methanol-water solution (70% v/v methanol in distilled water) to 70°C.
4. Add 5 ml of the hot methanol-water solution to the extraction tube. Gently mix the methanol-water and tea material on a vortex mixer; place in a water bath at 70°C for 5 minutes; mix again and then place in a water bath at 70°C for a further 5 minutes.
5. Gently mix the methanol-water and tea material on a vortex mixer again and then allow too cool for a 10 minutes at an air temperature of 20°C.
6. Centrifuge the extraction tube at a relative centrifugal force (RCF) of 2900 g for 10 minutes.
7. The extraction tube should now contain a liquid supernatant on top of a plug of tea material. Carefully decant supernatant into a clean graduated test tube.
8. Add 5 ml of the hot methanol-water solution to the plug in the extraction tube. Gently mix the methanol-water and tea material on a vortex mixer; place in a water bath at 70°C for 5 minutes; mix again and then place in a water bath at 70°C for a further 5 minutes.
9. Gently mix the methanol-water and tea material on a vortex mixer again and then allow too cool for a 10 minutes at an air temperature of 20°C.
10. Centrifuge the extraction tube at a RCF of 2900 g for 10 minutes.
11. The extraction tube should now contain a liquid supernatant on top of a plug of tea material. Carefully decant supernatant into the graduated test tube containing the supernatant from step 7.
12. Make up the pooled supernatants to 10 ml with the methanol-water solution.
13. Add 1 ml of a solution of 2.5 mg/ml EDTA and 2.5 mg/ml ascorbic acid in distilled water to the graduated test tube.
14. Dilute 1 part of the pooled supernatant mixture with 4 parts (by volume) of 10% acetonitrile stabiliser solution (10% v/v acetonitrile, 0.25 mg/ml ascorbic acid and 0.25 mg/ml EDTA in distilled water).
15. Decant the diluted pooled supernatant mixture into microcentrifuge tubes and centrifuge in a bench top centrifuge at a RCF of 14000 *g* for 10 minutes.

### HPLC Analysis conditions

- **Column:**: Luna Phenyl hexyl 5µ, 250 x 4.60 mm
- **Flow rate:**: 1 ml/min
- **Oven temperature:**: 30°C
- **Solvents:**: A: 2% acetic acid in acetonitrile
B: 2% acetic acid and 0.02 mg/ml EDTA in water
- **Injection volume:**: 10 µl

### Gradient:

| Time | % Solvent A | % Solvent B | Step |
|---|---|---|---|
| 0 to 10 min | 5 | 95 | Isocratic |
| 10 to 40 min | 5 - 18 | 95 - 85 | Linear gradient |
| 40 to 50 min | 18 | 82 | Isocratic |
| 50 to 55 min | 50 | 50 | Wash |
| 55 to 75 min | 5 | 95 | Isocratic |

**Quantification:** Peak area relative to a calibration curve constructed daily. Calibration curve is constructed from caffeine and the concentration of catechins is calculated using the relative response factors of the individual catechins to caffeine (from the ISO catechin method - ISO/CD 14502-2). Individual caffeine standards (Sigma, Poole, Dorset, UK) are used as peak identification markers.

### Determination of Catechins and Caffeine in Juice and Beverages

The amounts of catechins and caffeine in a liquid sample are determined simultaneously by reverse-phase HPLC as follows:

### Sample Preparation

1. 9 ml of the sample are taken and 1.12 ml of acetonitrile added, along with 1.12 ml of a solution of 2.5 mg/ml EDTA and 2.5 mg/ml ascorbic acid in distilled water.
2. The resulting solution is then decanted into microcentrifuge tubes and centrifuged at a RCF of 14000 g for 10 minutes.

### HPLC Analysis conditions

The HPLC analysis conditions are identical to those given above for the leaf tea.

### Determination of Theanine in Juice and Beverages

The amount of theanine in a liquid sample is determined by reversed phase HPLC chromatography using fluorimetric detection following post-column derivatisation with o-pthalaldehyde.

### Sample Preparation

The sample is diluted with de-ionised water (25°C) in a weight ratio of sample:water of 1:10.

### HPLC Analysis conditions

- **Column:**: Hypersil HyPURITY Elite^{™} C18, 5µ, 150mm x 4.6cm
- **Flow rate:**: 1 ml/min
- **Oven temperature:**: 35°C
- **Solvents:**: A: 5 mM pentadecafluorooctanoic acid in water
B: 5 mM pentadecafluorooctanoic acid in acetonitrile

### Gradient:

| Time (min) | % Solvent A | % Solvent B |
|---|---|---|
| 0 | 85 | 15 |
| 8 | 85 | 15 |
| 10 | 80 | 20 |
| 11 | 10 | 90 |
| 14 | 10 | 90 |
| 15 | 85 | 15 |
| 31 | 85 | 15 |

**Quantification:** The eluant from the column is fed into a low dead-volume 3-way junction and mixed with the o-Pthalaldehyde reagent in a 1:1 ratio, the o-Pthalaldehyde reagent being pumped at 1 ml/minute by the isocratic pump. (The o-Pthalaldehyde reagent is 1.0 g/l o-Pthalaldehyde, 5 ml/l methanol, 2 ml/l Brij 35 and 3 ml/l 2-mercaptoethanol in pH 10 borate buffer.) Fluorescence detection is: Excitation = 340 nm and Emission = 425 nm. Peak area relative to a calibration curve constructed daily is used for quantification. The calibration curve is constructed from dilutions of a standard solution of Suntheanine^{™} (Taiyo KK).

### Determination of Theanine in Leaf Tea

The amount of theanine in a solid sample is determined by reversed phase HPLC chromatography using fluorimetric detection following post-column derivatisation with o-pthalaldehyde.

### Sample Preparation

About 1.0 g of the sample is accurately weighed into a 100 ml volumetric flask. 50 ml of hot (60°C) deionised water is then added to the volumetric flask and the flask is vigorously shaken on an auto shaker for 30 minutes. After cooling to room temperature, the sample is made up to 100 ml with deionised water.

### HPLC Analysis conditions

The HPLC analysis conditions are identical to those given above for juice and beverages.

### Determination of Total Polyphenols

The total polyphenol content of a sample is determined using the Folin-Ciocalteu method as detailed in the International Standard published by the International Organization for Standardization as ISO 14502-1:2005(E).

### Leaf Size and Grade

For the purposes of the present invention, leaf particle size is characterised by sieve mesh size using the following convention:
- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 µm).

Leaf particle size may additionally or alternatively be characterized using the grades listed in the international standard ISO 6078-1982. These grades are discussed in detail in our European patent specification EP 1 365 657 B1 (especially paragraph [0041] and Table 2) which is hereby incorporated by reference.

### SUMMARY OF THE INVENTION

We have surprisingly found that unfermented tea juice has a composition different to that of conventional green tea extracts and can be combined with fermented tea to provide novel tea products. Without wishing to be bound by theory, we believe that unfermented tea juice has a relatively low level of gallated catechins and/or caffeine and can thus be combined with black tea to increase the soluble tea solids thereof without excessively increasing negative properties, such as bitterness, associated with gallated polyphenols and/or caffeine. Furthermore the tea juice is found to be relatively rich in theanine which is known to have certain desirable physiological effects such as increasing relaxation, alertness and/or concentration.

Thus in a first aspect, the present invention provides a process comprising the step of:
a) expressing juice from a first supply of fresh tea leaves thereby to produce leaf residue and tea juice;
b) subjecting the first supply of fresh tea leaves and/or the tea juice to an enzyme deactivation treatment thereby to prevent fermentation of the tea juice; and
c) combining the tea juice in which the enzymes have been deactivated with fermented or fermenting tea material.

In a second aspect, the present invention provides a tea product obtained and/or obtainable by the process. Such a product will comprise catechins but will have a lower level of catechins in the polyphenols than green tea products and will have a relatively low proportion of gallated catechins and thus may be more stable and/or less bitter than tea products produced by alternative processes.

Thus in a further aspect the present invention provides a composition comprising polyphenols wherein the polyphenols comprise catechins and the catechins comprise gallated catechins and non-gallated catechins, and wherein the weight ratio of the catechins to total polyphenols is less than 0.40 and wherein the weight ratio of the non-gallated catechins to the gallated catechins is at least 1.2:1, preferably in the range 1.4:1 to 20:1.

### DETAILED DESCRIPTION

### Expression of Juice

The tea juice for use in the present invention is expressed from a first supply of fresh tea leaves. The expression step also produces leaf residue which is separated from the tea juice, e.g. by filtering and/or centrifugation.

If the amount of juice expressed is too low then it becomes difficult to separate the juice from the leaf residue and/or leads to an inefficient process. Thus it is preferred that the amount of expressed juice is at least 10 ml per kg of the fresh tea leaves, more preferably at least 25 ml, more preferably still at least 50 ml and most preferably from 75 to 600 ml. When referring to the volume of juice expressed per unit mass of tea leaves it should be noted that the mass of the tea leaves is expressed on an "as is" basis and not a dry weight basis. Thus the mass includes any moisture in the leaves.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise degradation of the valuable tea compounds, it is preferred that the expression step is performed at ambient temperature. For example, the leaf temperature may be from 5 to 40°C, more preferably 10 to 30°C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pretreatment including, for example, a unit process selected from maceration, withering or a combination thereof.

The tea juice for use in the present invention is found to be unexpectedly low in gallated polyphenols. This is apparent from the weight ratio of non-gallated to gallated catechins in the juice. The green tea juice may, for example, have a weight ratio of non-gallated catechins to gallated catechins of greater than 1.4:1, more preferably greater than 1.6:1, more preferably still greater than 1.8:1 and most preferably from 3:1 to 20:1.

Maceration prior to expression may help in decreasing the time and/or pressure required to express the desired quantity of juice. Surprisingly, however, we have found that excessive damage to the fresh tea leaves prior to expression can result in a lowering of the weight ratio of non-gallated to gallated polyphenols in the expressed juice. Therefore in a preferred embodiment the fresh leaves are not subjected to a maceration and/or freeze-thaw process prior to or during the expression step.

### Enzyme Deactivation

Step (b) of the process of the invention comprises subjecting the the first supply of fresh tea leaves and/or the tea juice to an enzyme deactivation treatment thereby to prevent fermentation of the tea juice.

In one embodiment, the tea juice is subjected to the enzyme deactivation step immediately following expression. In particular it is preferred that the tea juice is subjected to the enzyme deactivation step not later than 10 minutes after expression, more preferably not later than 5 minutes and most preferably not later than 1 minute. This embodiment is particularly preferred if the leaf residue is to be further processed after expression to yield an at least partially fermented tea product, i.e. if the leaf residue is to be processed to make an oolong or black tea product.

In an alternative embodiment, the fresh tea leaves are subjected to the enzyme deactivation step before the expression step (a). This embodiment is particularly preferred if the leaf residue is to be further processed after expression to yield a substantially unfermented tea product, i.e. if the leaf residue is to be processed to make a green tea product.

Any known treatment capable of enzyme denaturation may be used to deactivate the fermentation enzymes. A particularly convenient enzyme deactivation treatment is a heat treatment. For example, the fresh leaves may be steamed and/or pan-fried; and/or the tea juice may be heated in a heat exchanger, or by steam injection or other such method suitable for heating liquids.

Deactivation of the fermentation enzymes produces green tea juice.

Preferably the deactivation treatment is sufficient to retain most of the catechins in the fresh leaves. In particular, it is preferred that the tea juice in which the enzymes have been deactivated comprises polyphenols and the polyphenols comprise catechins wherein the weight ratio of catechins to total polyphenols is at least 0.50:1, more preferably at least 0.60:1 and most preferably from 0.70 to 0.99:1.

### Combining the Tea Juice with Fermenting or Fermented Tea Material

Step (c) of the process of the invention comprises combining the tea juice in which the enzymes have been deactivated with fermented or fermenting tea material.

The fermented tea material may be black or oolong leaf tea and/or solids extracted from black or oolong leaf tea. Preferably the fermented material is black leaf tea. The manufacturing processes for producing fermented leaf tea from fresh tea leaves are well-known and suitable processes are described, for example, in Chapters 13 & 14 of "Tea - Cultivation to consumption" (K.C. Willson and M.N. Clifford (Eds), 1992, Chapman & Hall, London) which are hereby incorporated by reference in their entirety. A step common to manufacture of all leaf teas is a drying step. In the case of oolong and black leaf tea, the drying step usually also serves to deactivate the fermentation enzymes.

Preferably the fermented tea material comprises polyphenols and the polyphenols comprise catechins wherein the weight ratio of catechins to total polyphenols is less than 0.40:1, more preferably less than 0.30:1, more preferably still less than 0.20:1 and most preferably from 0.15:1 to 0.001:1.

In one embodiment, the process of the invention is used to manufacture a leaf tea product with increased amounts of water-soluble tea solids, thus allowing for increased speed of infusion of the leaf tea product. A convenient way of manufacturing such a product is by combining the tea juice with the leaf tea to form a mixture and then drying the mixture. The mixture is preferably dried to a water content of less than 30% by weight of the mixture, more preferably to a water content in the range of 1 to 10% by weight. Conveniently the tea juice may be sprayed onto the leaf tea to form the mixture. Additionally or alternatively the mixture may be dried in a fluid bed drier.

In another embodiment, the process of the invention is used to manufacture a ready-to-drink beverage, a tea powder or a tea concentrate having improved properties, such as lower bitterness, by combining the juice with tea solids extracted from a fermented leaf tea. For example, the juice or a fraction thereof may be combined with a powder or liquid concentrate comprising the tea solids extracted from the leaf tea. Additionally or alternatively the tea juice may be combined with a tea beverage comprising the tea solids extracted from the leaf tea.

The tea juice may be combined with the fermented or fermenting tea material in any amount. We have found however, that particularly desirable tea products can be prepared when the tea juice is combined with the fermented or fermenting tea material such that the resulting tea product comprises soluble tea solids derived from both the juice and tea material in roughly equal amounts. Thus it is preferred that the combination results in a tea product wherein the weight ratio of water-soluble tea solids derived from the tea juice to water-soluble tea solids derived from the fermented or fermenting tea material is in the range 5:1 to 1:5, more preferably 2:1 to 1:2 and most preferably 1.5:1 to 1:1.5.

The tea juice may be combined with the tea material without any processing of the juice following expression. Alternatively, for example, the juice may be subjected to a concentration and/or dilution step prior to the combination step.

Surprisingly we have found that unfermented tea juice can be combined with fermenting tea material and still increase the catechin content of a tea product manufactured from the fermenting tea material. This is surprising as we expected that any catechins in the tea juice would be oxidised by the fermentation enzymes present in the fermenting tea material. Thus in a preferred embodiment step (c) comprises combining the tea juice with fermenting dhool to form a mixture. The mixture may be fermented for at least 2 hours but still retain catechins from the tea juice. Therefore in one embodiment the mixture is fermented for at least 10 minutes, preferably at least 30 minutes and most preferably from 1 to 4 hours. Typically the fermentation is arrested by firing the mixture to produce leaf tea.

The fermented or fermenting tea material in step (c) may comprise the leaf residue from step (a). However, in order to maximise the tea solids in the final product, it is preferred that the fermented or fermenting tea material is derived from a second supply of fresh tea leaves.

### Processing the Leaf Residue

In order to maximise the efficiency of the process it is preferred that the leaf residue is not discarded but is further processed to produce a commercially viable product. In a particularly preferred embodiment, the process comprises an additional step (d) wherein the leaf residue is processed to produce leaf tea.

We have surprisingly found that if the amount of juice expressed is below 300 ml per kg of fresh leaves, the leaf residue can be processed to make leaf tea of at least conventional quality despite the fact that the leaf residue after expression has a lower overall level of tea compounds such as polyphenols and amino acids. In general, the quality of the final leaf tea (e.g. in terms of infusion performance) is better the less juice expressed. Thus it is preferred that the amount of juice expressed in step (a) is less than 300 ml per kg of tea leaves, more preferably less than 275 ml, more preferably still less than 250 ml and most preferably less than 225 ml.

The leaf residue may be processed to produce green leaf tea, black leaf tea or oolong leaf tea. In the case of oolong leaf tea and black leaf tea step (d) comprises fermenting the leaf residue.

The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that step (d) of the process comprises drying the leaf residue at a temperature of at least 75°C, more preferably at least 90°C.

It is preferred that step (d) comprises sorting the leaf tea manufactured from the leaf residue, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

### The Tea Product

The present invention provides a tea product obtained and/or obtainable by the process. Such products will have a low level of gallated catechins and/or a low level of caffeine and thus may be more stable and/or less bitter than tea products produced by alternative processes. Additionally or alternatively the products may have a higher level of theanine than tea products produced by alternative processes.

The tea product may, for example, be a leaf tea, a beverage, a tea powder or a liquid concentrate.

A beverage will typically comprise tea solids in an amount of from 0.001 to 5% by weight of the beverage, more preferably 0.01 to 3% by weight and most preferably 0.1 to 1% by weight

Owing to the combination of unfermented tea solids (from the tea juice) and fermented tea solids (from the tea material) in the product, the tea product will comprise catechin levels intermediate between those of fermented and unfermented tea products. Thus it is preferred that the product comprises polyphenols wherein the polyphenols comprise catechins and the weight ratio of the catechins to total polyphenols is less than 0.40, more preferably from 0.10 to 0.35 and most preferably from 0.20 to 0.30.

The tea product will typically comprise a relatively low proportion of gallated catechins. Preferably the catechins comprise gallated catechins and non-gallated catechins, and the weight ratio of the non-gallated catechins to the gallated catechins is at least 1.2:1, more preferably at least 1.4:1, more preferably still at least 1.5:1 and most preferably from 1.6 to 20:1.

The tea product will typically comprise a relatively low content of caffeine and/or a high level of theanine. Conveniently this can be represented by the weight ratio of theanine to caffeine. Preferably the weight ratio of theanine to caffeine is greater than 0.2, more preferably at least 0.3, most preferably from 0.4 to 2.0.

### The Composition

The present invention provides a composition which has the sensorial properties of a fermented tea product but which provides the health benefits of catechins without unwanted bitterness from large proportions of caffeine and/or gallated catechins.

The composition comprises polyphenols wherein the polyphenols comprise catechins and the catechins comprise gallated catechins and non-gallated catechins, and wherein the weight ratio of the catechins to total polyphenols is less than 0.40 and wherein the weight ratio of the non-gallated catechins to the gallated catechins is at least 1.2:1.

Preferably the composition has black tea character. Thus the weight ratio of the catechins to total polyphenols is less than 0.40, preferably from 0.10 to 0.35 and most preferably from 0.20 to 0.30. Additionally or alternatively the polyphenols comprise black tea polyphenols such as theaflavins, thearubigins or a mixture thereof.

Preferably the weight ratio of the non-gallated catechins to the gallated catechins is at least 1.4:1, more preferably at least 1.5:1 and most preferably from 1.6 to 20:1.

The composition will typically comprise a relatively low content of caffeine and/or a high level of theanine. Conveniently this can be represented by the weight ratio of theanine to caffeine. Preferably the weight ratio of theanine to caffeine is greater than 0.2, more preferably at least 0.3, most preferably from 0.4 to 2.0.

### EXAMPLES

The present invention will be further described with reference to the following examples.

### Example 1

This Example demonstrates the production of a green tea juice useful for the present invention.

### Production of Juice

Fresh Kenyan tea leaves (which had a catechin content of around 15% by dry weight) of *Camellia Sinensis* var. *assamica* were steamed for 60 seconds at ∼100°C to inactivate endogenous enzymes and thus prevent fermentation. The steamed leaves, cooled to room temperature, were chopped using a vegetable cutter to yield chopped leaf of average size of around 0.5 to 1 cm². The chopped leaves were then pressed using a screw press (Vincent horizontal continuous press model CP4, Vincent Corp., Tampa, Florida, USA) operating with a back-pressure of 80 psi (0.55 MPa). The resulting yield of juice was 50 ml/100 g leaves. The tea juice was immediately centrifuged for 20 minutes (10000 g at 3°C) and the supernatant was then filter-sterilised using a Nalgene^{™} filtration unit fitted with a 0.2 µm filter.

### Production of Reference Infusion

A portion of the chopped leaves which had not been pressed was dried using a fluidized bed drier (ten minutes at an inlet air temperature of 120°C, followed by ten minutes at an inlet air temperature of 90°C) to obtain a made green tea (green leaf tea) with moisture content of 9% by weight. An infusion of 2 g of this leaf tea was prepared by infusing 2 g of the tea in 200 ml freshly boiled water for 2 minutes.

### Results

Table 1 shows the composition of the catechins in the tea juice and the reference infusion.

**TABLE 1**

| | **Juice** | **Ref. Infusion** |
|---|---|---|
| EGC (mg/ml) | 9.51 | 0.256 |
| C (mg/ml) | 0.77 | 0.025 |
| EC (mg/ml) | 3.05 | 0.081 |
| EGCG (mg/ml) | 5.39 | 0.194 |
| ECG (mg/ml) | 2.01 | 0.081 |
| Total Catechins (mg/ml) | 20.73 | 0.636 |
| Total Polyphenols (mg/ml) | 24.82 | 0.820 |
| Theanine (mg/ml) | 2.18 | 0.052 |
| Caffeine (mg/ml) | 3.77 | 0.198 |
| Catechins / Polyphenols | 0.84 | 0.78 |
| (EGC+C+EC)/(EGCG + ECG) | 1.80 | 1.32 |
| Theanine / Caffeine | 0.58 | 0.26 |

This data shows that the proportion of gallated species in the catechins of green tea juice is low compared with the reference infusion. Furthermore, green tea juice has a higher ratio of theanine to caffeine compared with the reference infusion.

### Example 2

This Example demonstrates the effect of combining green tea juice with black leaf tea.

### Production of Samples

Three samples of leaf tea were prepared for analysis. Sample A was a commercial black leaf tea. Sample B was prepared by combining 182 g of green tea juice (produced as described in Example 1) with 142 g of the black leaf tea. Sample C was prepared by combining 250 g of the green tea juice with 98 g of the black leaf tea. For samples B and C the juice was added to the dry leaf tea in a beaker and mixed thoroughly. The mix was allowed to equilibrate for 30 minutes at 20°C and the dried using a fluidized bed drier (ten minutes at an inlet air temperature of 120°C, followed by ten minutes at an inlet air temperature of 90°C).

### Production of Infusions

An infusion of each leaf tea was prepared by infusing 2 g of each sample in 200 ml freshly boiled water for 2 minutes.

### Results

Table 2 shows the composition of the infusions.

**TABLE 2**

| | **Sample A** | **Sample B** | **Sample C** |
|---|---|---|---|
| Total solids (mg/ml) | 3.34 | 3.87 | 4.05 |
| EGC (mg/ml) | 0.000 | 0.103 | 0.154 |
| C (mg/ml) | 0.011 | 0.015 | 0.018 |
| EC (mg/ml) | 0.026 | 0.050 | 0.061 |
| EGCG (mg/ml) | 0.015 | 0.059 | 0.082 |
| ECG (mg/ml) | 0.021 | 0.034 | 0.042 |
| Total Catechins (mg/ml) | 0.073 | 0.261 | 0.357 |
| Total Polyphenols (mg/ml) | 0.851 | 1.007 | 1.071 |
| Theanine (mg/ml) | 0.089 | 0.096 | 0.106 |
| Caffeine (mg/ml) | 0.270 | 0.256 | 0.254 |
| Catechins / Polyphenols | 0.09 | 0.26 | 0.33 |
| (EGC+C+EC)/(EGCG + ECG) | 1.02 | 1.81 | 1.87 |
| Theanine / Caffeine | 0.33 | 0.38 | 0.42 |

These results show that tea products made by combining green juice with black leaf tea (samples B and C) produce infusions with higher levels of solids, catechins and theanine than those produced from the black leaf tea with no juice added (sample A). Furthermore, these results show that the samples with green juice added (samples B and C) have a lower proportion of gallated catechins in the infusions produced therefrom compared with black leaf tea (sample A) and do not increase the caffeine level of the infusions. Furthermore, the colour of the above infusions was analysed and there was found to be negligible difference in colour between the three infusions. Thus green tea juice can be used to increase the catechin content of black leaf tea infusions without bringing excessive levels of gallated catechins and/or caffeine (which are both associated with bitterness) and whilst retaining the colour expected of black tea.

### Example 3

This Example demonstrates the effect of combining green tea juice with fermenting dhool.

### Production of Juice

Fresh tea leaves were steamed for 60 seconds at ∼100°C to inactivate endogenous enzymes and thus prevent fermentation. Steamed leaves, cooled to room temperature, were chopped using a vegetable cutter to yield chopped leaf of average size of around 0.5 to 1 cm². The chopped leaves were then pressed using a hydraulic press (5 Tonnes applied to a 500 g mass of leaf inside a cylinder of diameter 160 mm, resulting in a downward pressure of 354 psi (2.44 MPa)) to express green tea juice. The yield of green tea juice was 22 ml/100 g leaves, and had a total solids content of 8% by weight. The tea juice was immediately centrifuged for 20 minutes (10000 g at 3°C) and the supernatant was then filter-sterilised using a Nalgene^{™} filtration unit fitted with a 0.2 µm filter. The solids content of the tea juice after centrifugation and filtration was 6% by weight.

### Production of Leaf Tea

Fresh Kenyan tea leaves (two leaves and a bud) of *Camellia sinensis* var. *assamica* which had been withered for 4 hours at 20°C were used. The withered leaves were chopped using a vegetable cutter before being fed twice through a CTC (cut, tear, curl) machine (Rollers set at six teeth per inch with speeds of 1000 and 100 rpm respectively). The fresh dhool was then split into two portions. The first portion was combined with deionised water in a weight ratio of 7:1 dhool to water. The second portion was combined with the green tea juice in a weight ratio of 7:1 dhool to juice. Both portions were then each fermented for 2 hours at a temperature of 25°C using a Teacraft^{™} fermentation unit. Each portion was then dried in a fluid bed drier to produce leaf tea. The leaf tea from the first portion (dhool + water) was labelled as sample D and leaf tea from the second portion (dhool + green juice) was labelled as sample E.

### Results

Table 3 shows the composition of infusions produced from the leaf teas under identical infusion conditions.

**TABLE 3**

| | **Sample D** | **Sample E** |
|---|---|---|
| EGC (mg/ml) | 0.017 | 0.024 |
| C (mg/ml) | 0.000 | 0.006 |
| EC (mg/ml) | 0.013 | 0.019 |
| EGCG (mg/ml) | 0.040 | 0.050 |
| ECG (mg/ml) | 0.017 | 0.026 |
| Total Catechins (mg/ml) | 0.087 | 0.125 |
| Total Solids (mg/ml) | 3.256 | 3.429 |
| Theanine (mg/ml) | 0.072 | 0.078 |
| Caffeine (mg/ml) | 0.387 | 0.381 |
| (EGC+C+EC)/(EGCG + ECG) | 0.52 | 0.64 |
| Theanine / Caffeine | 0.19 | 0.20 |

These results demonstrate that even though the green juice was added at the start of fermentation and was exposed to the fermentation process (which would be expected to oxidise the catechins in the green juice), the resulting leaf tea still produced infusions with enhanced catechin content.

## Claims

1. A process comprising the steps of:
a) expressing juice from a first supply of fresh tea leaves thereby to produce leaf residue and tea juice;
b) subjecting the first supply of fresh tea leaves and/or the tea juice to an enzyme deactivation treatment thereby to prevent fermentation of the tea juice; and
c) combining the tea juice in which the enzymes have been deactivated with fermented or fermenting tea material.

2. A process according to claim 1 wherein the tea juice in step (c) is combined with fermented leaf tea.

3. A process according to claim 1 wherein step (c) comprises combining the tea juice with fermenting dhool to form a mixture.

4. A process according to claim 3 wherein the mixture is fired to produce leaf tea.

5. A process according to any one of the preceding claims wherein the fermented or fermenting tea material is derived from a second supply of fresh tea leaves.

6. A process according to any one of the preceding claims wherein the enzyme deactivation treatment is a heat treatment.

7. A process according to any one of the preceding claims wherein the process comprises the additional step of:
d) processing the leaf residue to produce leaf tea.

8. A tea product obtainable by the process of any one of the preceding claims.

9. A tea product according to claim 8 comprising polyphenols wherein the polyphenols comprise catechins and the weight ratio of the catechins to total polyphenols is less than 0.40, preferably from 0.10 to 0.35.

10. A tea product according to claim 9 wherein the catechins comprise gallated catechins and non-gallated catechins, and wherein the weight ratio of the non-gallated catechins to the gallated catechins is at least 1.2:1, preferably in the range 1.4:1 to 20:1.

11. A tea product according to any one of claims 8 to 10 comprising theanine and caffeine in a weight ratio of at least 0.2:1.

12. A composition comprising polyphenols wherein the polyphenols comprise catechins and the catechins comprise gallated catechins and non-gallated catechins, **characterized in that** the weight ratio of the catechins to total polyphenols is less than 0.40 and wherein the weight ratio of the non-gallated catechins to the gallated catechins is at least 1.2:1, preferably in the range 1.4:1 to 20:1.

13. A composition according to claim 12 wherein the weight ratio of catechins to total polyphenols is from 0.10 to 0.35.

14. A composition according to claim 12 or claim 13 wherein the polyphenols comprise theaflavins, thearubigins or a mixture thereof.

15. A composition according to any one of claims 12 to 14 comprising theanine and caffeine in a weight ratio of at least 0.2:1.

## Patentansprüche

1. Verfahren, umfassend die Schritte:
a) Auspressen von Saft aus einer ersten Zuführung von frischen Teeblättern, um dadurch einen Blattrückstand und Teesaft herzustellen;
b) Unterwerfen der ersten Zuführung von frischen Teeblättern und/oder des Teesaftes einer Enzym-Desaktivierungsbehandlung, um dadurch eine Fermentation des Teesaftes zu verhindern, und
c) Kombinieren des Teesaftes, in dem die Enzyme desaktiviert wurden, mit fermentiertem oder fermentierendem Teematerial.

2. Verfahren gemäß Anspruch 1, wobei der Teesaft in Schritt (c) mit einem fermentierten Blatttee kombiniert wird.

3. Verfahren gemäß Anspruch 1, wobei Schritt (c) Kombinieren des Teesaftes mit fermentierendem Dhool unter Bildung eines Gemisches umfasst.

4. Verfahren gemäß Anspruch 3, wobei das Gemisch unter Herstellung von Blatttee gefeuert wird.

5. Verfahren gemäß einem der vorangehenden Ansprüche, wobei das fermentierte oder fermentierende Teematerial aus einer zweiten Zuführung von frischen Teeblättern stammt.

6. Verfahren gemäß einem der vorangehenden Ansprüche, wobei die Enzym-Desaktivierungsbehandlung eine Wärmebehandlung ist.

7. Verfahren gemäß einem der vorangehenden Ansprüche, wobei das Verfahren den zusätzlichen Schritt:
d) Verarbeiten des Teerückstandes unter Herstellung von Blatttee umfasst.

8. Teeprodukt, das durch das Verfahren gemäß einem der vorangehenden Ansprüche erhältlich ist.

9. Teeprodukt gemäß Anspruch 8, das Polyphenole umfasst, wobei die Polyphenole Catechine umfassen und das Gewichtsverhältnis der Catechine zu Gesamt-Phenolen kleiner als 0,40, vorzugsweise von 0,10 bis 0,35, ist.

10. Teeprodukt gemäß Anspruch 9, wobei die Catechine gallatierte Catechine und nicht-gallatierte Catechine umfassen und wobei das Gewichtsverhältnis der nicht-gallatierten Catechinen zu den gallatierten Catechinen wenigstens 1,2:1 ist, vorzugsweise im Bereich von 1,4:1 bis 20:1, ist.

11. Teeprodukt gemäß einem der Ansprüche 8 bis 10, das Theanin und Coffein in einem Gewichtsverhältnis von wenigstens 0,2:1 umfasst.

12. Zusammensetzung, die Polyphenole umfasst, wobei die Polyphenole Catechine umfassen und die Catechine gallatierte Catechine und nicht-gallatierte Catechine umfassen, **dadurch gekennzeichnet, dass** das Gewichtsverhältnis der Catechine zu Gesamt-Phenolen kleiner als 0,40 ist und wobei das Gewichtsverhältnis der nicht-gallatierten Catechine zu den gallatierten Catechinen wenigstens 1,2:1 ist, vorzugsweise im Bereich von 1,4:1 bis 20:1 ist.

13. Zusammensetzung gemäß Anspruch 12, wobei das Gewichtsverhältnis von Catechinen zu Gesamt-Polyphenolen 0,10 bis 0,35 ist.

14. Zusammensetzung gemäß Anspruch 12 oder Anspruch 13, wobei die Polyphenole Theaflavine, Thearubigine oder ein Gemisch davon umfassen.

15. Zusammensetzung gemäß einem der Ansprüche 12 bis 14, die Theanin und Coffein in einem Gewichtsverhältnis von wenigstens 0,2:1 umfasst.

## Revendications

1. Procédé comprenant les étapes consistant à :
a) exprimer le jus d'un premier apport de feuilles de thé fraîches pour produire ainsi un résidu de feuilles et un jus de thé ;
b) soumettre le premier apport de feuilles de thé fraîches et/ou le jus de thé à un traitement de désactivation enzymatique empêchant ainsi la fermentation du jus de thé ; et
c) combiner le jus de thé dans lequel les enzymes ont été désactivées avec un matériau de thé fermenté ou fermentant.

2. Procédé selon la revendication 1, dans lequel le jus de thé à l'étape (c) est associé au thé en feuilles fermenté.

3. Procédé selon la revendication 1, dans lequel l'étape (c) comprend la combinaison du jus de thé avec une masse de fermentation pour former un mélange.

4. Procédé selon la revendication 3, dans lequel le mélange est chauffé pour produire du thé en feuilles.

5. Procédé selon l'une quelconque des revendications précédentes, dans lequel le matériau de thé fermenté ou fermentant provient d'un deuxième apport de feuilles de thé fraîches.

6. Procédé selon l'une quelconque des revendications précédentes, dans lequel le traitement de désactivation enzymatique est un traitement thermique.

7. Procédé selon l'une quelconque des revendications précédentes, dans lequel le procédé comprend l'étape supplémentaire consistant à :
d) traiter le résidu de feuilles pour produire du thé en feuilles.

8. Produit de thé pouvant être obtenu par le procédé selon l'une quelconque des revendications précédentes.

9. Produit de thé selon la revendication 8, comprenant des polyphénols, les polyphénols comprenant des catéchines et le rapport en poids des catéchines aux polyphénols totaux est inférieur à 0,40, de préférence est de 0,10 à 0,35.

10. Produit de thé selon la revendication 9, dans lequel les catéchines comprennent des catéchines gallatées et des catéchines non gallatées et dans lequel le rapport en poids des catéchines non gallatées aux catéchines gallatées est d'au moins 1,2:1, de préférence dans l'intervalle de 1,4:1 à 20:1.

11. Produit de thé selon l'une quelconque des revendications 8 à 10, comprenant de la théanine et de la caféine en un rapport en poids d'au moins 0,2:1.

12. Composition comprenant des polyphénols, les polyphénols comprenant des catéchines et les catéchines comprenant des catéchines gallatées et des catéchines non gallatées, **caractérisée en ce que** le rapport en poids des catéchines aux polyphénols totaux est inférieur à 0,40 et dans laquelle le rapport en poids des catéchines non gallatées aux catéchines gallatées est d'au moins 1,2:1, de préférence dans l'intervalle de 1,4:1 à 20:1.

13. Composition selon la revendication 12, dans laquelle le rapport en poids des catéchines aux polyphénols totaux est de 0,10 à 0,35.

14. Composition selon la revendication 12 ou la revendication 13, dans laquelle les polyphénols comprennent des théaflavines, des théarubigines ou un mélange de celles-ci.

15. Composition selon l'une quelconque des revendications 12 à 14, comprenant de la théanine et de la caféine en un rapport en poids d'au moins 0,2:1.
